# EUROPÄISCHE PATENTSCHRIFT

(11) **EP 0 856 976 B1**
(45) Veröffentlichungstag und Bekanntmachung des Hinweises auf die Patenterteilung: **09.01.2013**
(21) Anmeldenummer: 97119791.8
(22) Anmeldetag: 12.11.1997
(51) Int. Cl.: H04M 1/247, H04M 1/27

(54) **Kommunikationssystem für Hörbehinderte, Telefon und Verfahren zum Telefonieren mit einem derartigen Kommunikationssystem**
Communication system for hearing-impaired people, telephone and method for using such a system
Système de communication pour malentendants, téléphone et méthode d'utilisation d'un tel système

(30) Priorität: 30.01.1997 DE 19703373
(43) Veröffentlichungstag der Anmeldung: 05.08.1998
(73) Patentinhaber: Deutsche Telekom AG, 53113 Bonn (DE)
(72) Erfinder: Naumburger, Volkmar, Dr.-Ing., 15537 Erkner (DE)

(56) Entgegenhaltungen:
- GB-A- 2 183 880
- SCHULTHEISS ULRICH, LOCHSCHMIDT BERND: "Sprechtechnologie hilft Behinderten zu kommunizieren." TELEKOM PRAXIS, August 1993 (1993-08), XP009004242
- BAZZANI M ET AL: "PC-based telephone communications system for deaf-blind people" IEEE, 18. November 1988 (1988-11-18), XP010071624

## Beschreibung

Die Erfindung betrifft ein Kommunikationssystem für Hörbehinderte, insbesondere Telefonanlage oder Zubehör zum hörbehindertengerechten Ausstatten einer Telefonanlage, wobei das System eine Spracherkennungseinheit aufweist, welche über ein Telefonnetz und mit einem Telefon empfangene Signale in einen computerlesbaren Code, insbesondere Sprachsignale in den entsprechenden ASCII-Text, umzuwandeln imstande ist, der an einer Ausgabeeinheit, z.B. Monitor oder Display als Text darstellbar ist.

Außerdem betrifft die Erfindung ein Verfahren zum Telefonieren mit einem Kommunikationssystem für Hörbehinderte, wobei über das Telefonnetz empfangene von einem Kommunikationspartner gesprochene Sprache mittels einer Spracherkennungseinheit in einen computerlesbaren Code, insbesondere in den entsprechenden ASCII-Text, umgewandelt und auf einem Bildschirm dargestellt wird, so daß der Hörbehinderte die Nachricht lesen und darauf reagieren kann.

Bekannte technische Lösungen basieren auf der Schaffung optischer Kontakte zum Zwecke des Lippenlesens oder der Anwendung der Gebärdensprache. Diese Lösungen setzen eine Video-Sende- und Empfangseinrichtung auf der Seite des Hörbehinderten und seines Kommunikationspartners voraus. In Abhängigkeit von der Bandbreite des Videokanals bewegt sich die Qualität der Videoübertragung im Bereich von sehr gut (geeignet für Lippenlesen) bis schlecht (ungeeignet für Lippenlesen). Insbesondere bei den üblichen Telefonbandbreiten ist ein sicheres Lippenlesen sehr infrage gestellt. So ist der Stand der Technik dadurch gekennzeichnet, daß entweder nur die Personen, die die Gebärdensprache beherrschen, per Video, unabhängig von der Übertragungsqualität, kommunizieren können oder, daß ein erheblicher technischer Aufwand zu treiben ist, damit ein sicheres Lippenlesen ermöglicht werden kann. In jedem Fall muß auf beiden Seiten der Kommunikation eine spezielle Einrichtung (Video) vorhanden sein. Das schließt von vornherein die breite Kommunikationsfahigkeit aus.

Ein rein akustischer geführter Dialog ist bisher nicht möglich gewesen.

Weiterhin ist bekannt, über geschriebenen Text ähnlich der "Talk"-Option des Internets rein visuell zu kommunizieren. Derartige Kommunikationsanlagen weisen auf beiden Seiten der Kommunikation eine Ein- und Ausgabeeinrichtung auf, wobei die eingegebenen Daten dem Kommunikationspartner über das Telefonnetz übermittelt werden.

Aus der GB-A-2 183 880 ist ein behindertengerechtes Kommunikationssystem bekannt, das direkt mit dem Telefonnetz verbunden ist. Hierbei werden ausschließlich vorformulierten Sätze durch den Behinderten abgerufen; so daß der Behinderte mit diesen Sätzen individuell auf den Anrufer reagieren kann. Einer dieser Sätze bittet den Anrufer um deutliche Aussprache, ein anderer fordert den Anrufer zur Wiederholung einer Aussage auf. Eine Spracherkennung und deren selbsttätige Optimierung durch das System erfolgt nicht. Vielmehr offenbart die GB-A-2 183 880 lediglich die Umsetzung von Phonemen in Schrift, ohne dass hierbei das Verständnis von Worten gegeben ist.

In dem Aufsatz SCHULTHEISS Ulrich, LOCHSCHMIDT Bernd: Sprachtechnologie hilft Behinderten zu kommunizieren. In: telekom praxis 8/93, S.47-50 wird erwähnt, dass eine Sprecherkennung zum Einsatz kommen kann und dass damit Sprache in Text umgesetzt werden kann. Zum Zweck der Kommunikation mit Behinderten kann also ein Spracherkennungssystem zur Umsetzung von gesprochener Sprache in geschriebenen Text eingesetzt werden.

In der XP010071624, BAZZANI M ET AL: 'PC-based telphone communications system for deaf-blind people' IEEE, 18. November 1988 (1988-11-18) wird ein behindertengerechte Kommunikationssystem beschrieben, das direkt ohne zwischengeschaltetes Telefon mit einer Nebenstellenanlage PABX verbunden ist. Der ferne, nicht-behinderte Teilnehmer kommuniziert über ein Standard-Telefon. Im übrigen geht diese Schrift jedoch nicht über die zuvor beschriebene Kommunikationsanlage hinaus.

Der Erfindung liegt die Aufgabe zugrunde, ein Verfahren und eine Vorrichtung zum Telefonieren für Hörbehinderte, insbesondere Gehörlose, unter Nutzung der üblichen Telefoneinrichtungen und unter Optimierung der Übertragungsweise und -qualität zu schaffen. Insbesondere soll vermieden werden, daß auf beiden Seiten der Kommunikation spezielle Einrichtungen erforderlich sind; es soll eine Kommunikationsanlage geschaffen werden, mit welcher von und mit gewöhnlichen Telefonanlagen kommuniziert werden kann.

Die Lösung der Aufgabe besteht bei einem Kommunikationssystem für Hörbehinderte, insbesondere Telefonanlage oder Zubehör zum hörbehindertengerechten Ausstatten einer Telefonanlage, wobei das System eine Spracherkennungseinheit aufweist, welche über ein Telefonnetz und mit einem Telefon empfangene Signale in einen computerlesbaren Code, insbesondere Sprachsignale in den entsprechenden ASCII-Text, umzuwandeln imstande ist, der an einer Ausgabeeinheit, z.B. Monitor oder Display, als Text darstellbar ist, darin, dass im Speicher der Spracherkennungseinheit die empfangenen Signale zwischengespeichert werden und einem Kommunikationspartner ganz oder teilweise, z.B. ein Wort oder eine Phrase, wieder vorgespielt wird, falls es von der Spracherkennungseinheit nicht erkannt wurde, und der Kommunikationspartner mittels einer Ansage aufgefordert wird, die jeweilige Sequenz deutlich zu wiederholen oder ein Synonym oder eine andere Formulierung zu wählen, worauf die wiederholte Sequenz anstelle der ursprünglichen gespeichert und in einen computerlesbaren Code umgewandelt wird.

Die erfindungsgemäße Vorrichtung hat gegenüber den bekannten Telefonanlagen für Hörbehinderte den Vorteil, daß von ihr aus mit beliebigen Telefonanlagen kommuniziert werden kann, d.h. daß auf Seiten des normalhörenden Kommunikationspartners keine spezielle Zusatzeinrichtung wie eine Videoanlage oder ein Terminal notwendig ist. Der hörbehinderte Benutzer des Kommunikationssystems ist damit in der Wahl seines Kommunikationspartners nicht eingeschränkt und wesentlich flexibler als nach dem Stand der Technik möglich.

Da der Spracherkennungseinheit des erfindungsgemäßen Kommunikationssystems ein Speicher zugeordnet ist, in dem Ansagetexte gespeichert werden können, wird eine akustische Benutzerführung des anrufenden, normalhörenden Gesprächspartners ermöglicht, die z.B. auf das Hörbehinderten-Telefon und automatische Spracherkennung hinweist.

Weiterhin ist vorgesehen, in diesem Speicher die empfangenen Signale, d.h. die Sprache des Kommunikationspartners, zwischenzuspeichern, bis eine vollständige Umwandlung in einen computerlesbaren Code gelungen ist. Dies hat den Vorteil, daß dem normalhörenden Kommunikationspartner Sequenzen seines Gesprächsbeitrags, z.B. ein Wort oder eine Phrase, wieder vorgespielt werden können, falls diese für die Spracherkennungseinheit nicht erkennbar war.

Es kommt häufig vor, daß ein Hörbehinderter, insbesondere ein Gehörloser, auch sprachbehindert ist. Um auch ihm ein Telefonieren mit beliebigen Gesprächspartnern zu ermöglichen, weist die erfindungsgemäße Vorrichtung in einer vorteilhaften Weiterentwicklung einen Sprachsynthesizer auf, welcher eine Nachricht, die als ASCII-Text vorliegt, in ein Sprachsignal umzuwandeln und der Sendeelektronik zum Senden an den Kommunikationspartner aufzugeben imstande ist. Der Text kann wie auch die in Text umgewandelten Sprachsignale des Kommunikationspartners an einer Ein- und Ausgabeeinheit ein- bzw. ausgegeben werden, welche vorzugsweise als Monitor mit Tastatur Teil des Kommunikationssystems ist.

Vorzugsweise sind die Spracherkennungseinheit, der Sprachsynthesizer und die Ein- und Augabeeinheit in einem Computer mit Monitor und Tastatur integriert, welcher an ein Telefon oder direkt ans Telefonnetz angeschlossen wird und zusammen mit dem Telefon ein Beispiel für ein erfindungsgemäßes Kommunikationssystem ist.

Ein eingehender Anruf wird dem Benutzer vorzugsweise optisch oder optisch und akustisch signalisiert, so daß der Benutzer auf den Anruf reagieren und die Verbindung zum Anrufer herstellen kann, z.B. durch Abnehmen des Hörers. Vorzugsweise kann das für das Kommunikationssystem benutze Telefon auch in gewohnter Weise zum Telefonieren für Normalhörende verwendet werden, z.B. indem die Spracherkennungseinheit und gegebenenfalls der Sprachsynthesizer abgekoppelt wird. Es ist daher von Vorteil, ein handelsübliches Telefon dahingehend abzuwandeln, daß es zum Anschluß an eine Spracherkennungseinheit und gegebenenfalls einen Sprachsynthesizer sowie eine nachgeschaltete Ein- und Ausgabeeinheit geeignet ist. Dazu weist es vorzugsweise neben den üblichen Funktionen, wie z.B. Lautsprecher und Mikrofon, einen Ausgang zum Anschluß an eine Spracherkennungseinheit auf, wodurch eine funktionelle Kopplung der Spracherkennungseinheit und gegebenenfalls des Sprachsynthesizers an die Sende- und Empfangselektronik des Telefons herstellbar ist. Das Telefon kann dann in üblicher Weise von Normalhörenden benutzt werden. Durch Zuschalten der Spracherkennungseinheit und der Ausgabeeinheit wird es von Hörbehinderten benutzbar und dient zum Empfangen der Sprachsignale des Kommunikationspartners, die dann in Text umgewandelt werden, sowie zum senden der Sprachsignale des Hörbehinderten, die diese entweder selbst in den Hörer hineinspricht oder als Text eingibt, welcher vom Sprachsynthesizer in Sprache umgewandelt und dem Kommunikationspartner übermittelt werden. Das erfindungsgemäße Kommunikationssystem kann jedoch auch ohne Veränderung des handelsüblichen Telefons mittels eines Telefonadapters, z.B. wie bei einer Fax-Weiche oder einem Anrufbeantworter, zugeschaltet werden.

Das erfindungsgemäße Verfahren zum Telefonieren mit einem Kommunikationssystem für Hörbehinderte, wobei über das Telefonnetz empfangene von einem Kommunikationspartner gesprochene Sprache mittels einer Spracherkennungseinheit in einen computerlesbaren Code, insbesondere in den entsprechenden ASCII-Text, umgewandelt und auf einem Bildschirm dargestellt wird, so daß der Hörbehinderte die Nachricht lesen und darauf reagieren kann, beruht darauf, dass das im Speicher der Spracherkennungseinheit die empfangenen Signale zwischengespeichert werden und dem Kommunikationspartner ganz oder teilweise, z.B. ein Wort oder eine Phrase, wieder vorgespielt wird, falls es von der Spracherkennungseinheit nicht erkannt wurde, und der Kommunikationspartner mittels einer Ansage aufgefordert wird, die jeweilige Sequenz deutlich zu wiederholen oder ein Synonym oder eine andere Formulierung zu wählen, worauf die wiederholte Sequenz anstelle der ursprünglichen gespeichert und in einen computerlesbaren Code umgewandelt wird. Das Verfahren zum Telefonieren für Hörbehinderte sieht also eine akustische Benutzerführung des normalhörenden Teilnehmers vor. Nachdem die Telefonverbindung hergestellt wurde, wird vorzugsweise ein Ansagetext aus dem Speicher abgespielt, welcher den normalhörenden Teilnehmer auf ein Hörbehinderten-Telefon mit automatischer Spracherkennung hinweist. Hier kann auch die Bitte geäußert werden, möglichst deutlich zu sprechen, um die Spracherkennung zu erleichtern. Da Spracherkennungseinheiten nicht alle Worte einer natürlichen Rede verstehen können und selbst bekannte Worte nicht mit 100% Sicherheit erkennen können, ist es von Vorteil, in einem Speicher die Rede des hörenden Teilnehmers temporär aufzuzeichnen. Diese Aufzeichnung kann selektiv - nämlich genau das Wort oder die Phrase, das bzw. die nicht erkannt wurde - wiedergegeben werden, wenn der Erkenner kein Erkennungsresultat liefern kann. An den hörenden Teilnehmer erfolgt dann die automatische Aufforderung, entweder das nicht erkannte Wort zu wiederholen oder ein anderes Synonym zu wählen. Diese wiederholte Sprachsequenz wird dann anstelle der ursprünglichen gespeichert und in einen computerlesbaren Code umgewandelt bzw. bei Nichterkennen erneut mit der Bitte um Wiederholung wiedergegeben. Der Benutzer des Kommunikationssystems antwortet seinem Kommunikationspartner, indem er in bekannter Weise in den Telefonhörer oder in ein Mikrofon spricht. Falls der hörbehinderte Benutzer zusätzlich sprachbehindert ist, antwortet er seinem Kommunikationspartner, indem er an einer Ein- und Ausgabeeinheit eine Nachricht eingibt, die als ASCII-Text einem Sprachsynthesizer übermittelt wird, von diesem in ein Sprachsignal umgewandelt und der Sendeelektronik zum Senden an den Kommunikationspartner aufgegeben wird. So können sowohl Hör- als auch Sprachbehinderung durch die erfindungsgemäße Lösung erfasst werden.

Beispiele der Erfindung sind in der Zeichnung dargestellt und anschließend beschrieben. Dabei zeigen
- Figur 1: ein Blockdiagramm eines Kommunikationssystems für Hörbehinderte,
- Figur 2: ein Blockdiagramm eines Kommunikationssystems für Hör- und Sprachbehinderte,
- Figur 3: ein Flußdiagramm für ein Verfahren zum Telefonieren mit einem Kommunikationssystem für Hörbehinderte bzw. zur Umwandlung von Sprache in Text im Rahmen eines Kommunikationssystems für Hörbehinderte
- Figur 4: ein Flußdiagramm für ein Verfahren zum Telefonieren mit einem Kommunikationssystem für Hör- und Sprachbehinderte, insbesondere ein Verfahren zur Umwandlung von Sprache in Text im Rahmen eines solchen Kommunikationssystems.

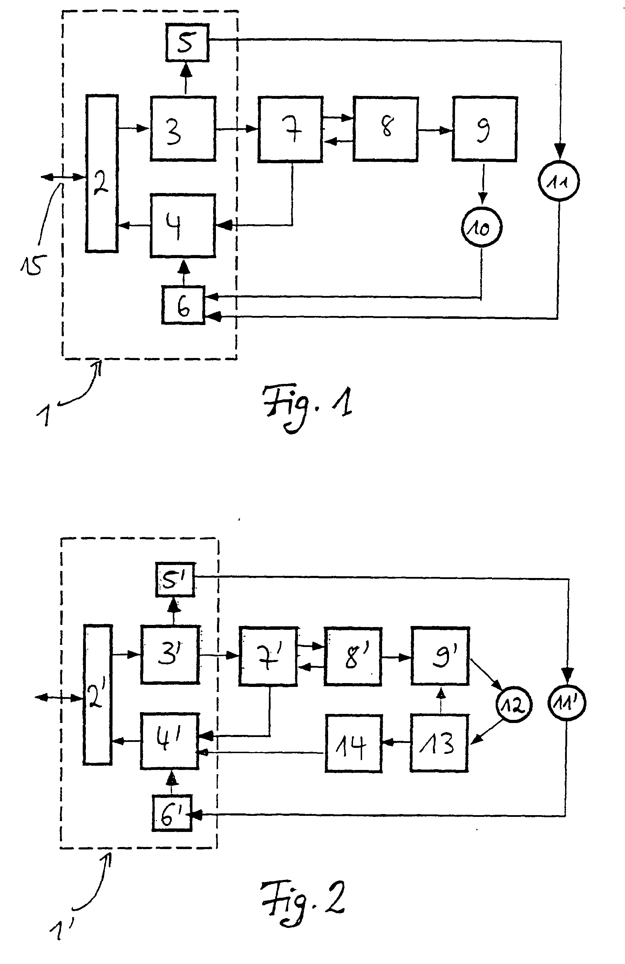

In Figur 1 ist ein Blockdiagramm eines Kommunikationssystems für Hörbehinderte mit einem Telefon 1 dargestellt. Das Telefon 1 ist entweder als Bestandteil des Kommunikationssystems oder als unabhängige Vorrichtung anzusehen, welche mit einem erfindungsgemäßen Kommunikationssystem hörbehindertengerecht erweitert wird.

Das Telefon weist in bekannter Weise eine Sende- und Empfangselektronik 2 zum Senden und Empfangen von Signalen, insbesondere Sprachsignalen, über das Telefonnetz auf. Die Signale werden über einen Netzanschluß 15 an das Telefonnetz geleitet bzw. diesem entnommen. Eine Hörschaltung 3 führt die über das Telefonnetz übermittelten Signale einem Lautsprecher 5 zu, der z.B. in einen Telefonhörer integriert ist, so daß der normalhörende Benutzer 11 sie als Sprache hören kann. Der normalhörende Benutzer 11 antwortet durch Hineinsprechen in ein Mikrofon 6, das z.B. auch in den Telefonhörer integriert ist. Eine Sprechschaltung 4 führt diese Sprachsignale der Sende- und Empfangselektronik 2 zu, die sie dem Kommunikationspartner über das Telefonnetz übermittelt.

Ein hörbehinderter Benutzer 10 kann den mit dem Lautsprecher 5 wiedergegebenen Gesprächsbeitrag seines Kommunikationspartners nur schlecht oder überhaupt nicht verstehen. Um ihm dennoch eine breite telefonische Kommunikation zu ermöglichen, d.h. eine Kommunikation mit beliebigen Gesprächspartnern, deren Telefone nicht speziell mit Videoanlagen oder ähnlichem ausgerüstet sind, ist der Sprechschaltung 3 eine Spracherkennungseinheit 8 nachgeschaltet, die die Sprachsignale in einen computerlesbaren Code, insbesondere einen ASCII-Text, umzuwandeln imstande ist. In dem hier gezeigten Beispiel der Erfindung wird die gesprochene Sprache zunächst in einem Speicher 7 temporär zwischengespeichert. Die Spracherkennungseinheit wandelt die Worte aus dem Speicher in einen ASCII-Text um. Falls diese Umwandlung nicht gelingt, wird dem normalhörenden Anrufer die jeweilige nicht erkannte Sequenz aus dem Speicher erneut vorgespielt und er wird mit einem Ansagetext aufgefordert, diese Sequenz deutlicher zu wiederholen oder eine andere Formulierung zu wählen. Dazu wird die gespeicherte Ansage zusammen mit dem nicht erkannten Gesprächsbeitrag als Sprachsignal der Sprechschaltung aufgegeben und in üblicher Weise dem Kommunikationspartner übermittelt. Der entsprechende Ansagetext ist dauerhaft im Speicher gespeichert. Automatisch bei Gesprächsbeginn wird ein weiterer dauerhaft gespeicherter Ansagetext abgespielt, der den Kommunikationspartner darüber informiert, daß er mit einer Telefonanlage für Hörbehinderte verbunden ist.

Der in computerlesbaren Code umgewandelte Gesprächsbeitrag des normalhörenden Kommunikationspartners wird als Text mit einer Ausgabeeinheit 9, z.B. auf einem Monitor oder einem Display, dargestellt, so daß der hörbehinderte Benutzer ihn lesen kann. Der Benutzer kann dann in gewohnter Weise durch Hineinsprechen in das Mikrofon 6 des Hörers antworten. Eine Ausgestaltung des erfindungsgemäßen Kommunikationssystems, die für zusätzlich sprachbehinderte Benutzer geeignet ist, ist in Figur 2 dargestellt und unten beschrieben.

Die dargestellte Telefonanlage kann von Hörbehinderten wie von Normalhörenden gleichermaßen benutzt werden.

In Figur 2 ist ein Blockdiagramm eines Kommunikationssystems für Hör- und zusätzlich Sprachbehinderte 12 mit einem Telefon 1' dargestellt. Analog zu Figur 1 ist das Telefon 1 entweder als Bestandteil des Kommunikationssystems oder als unabhängige Vorrichtung anzusehen, welche mit einem erfindungsgemäßen Kommunikationssystem hörbehindertengerecht erweitert wird. Die Komponenten Sende- und Empfangselektronik 2', Hör- und Sprechschaltung 3' bzw. 4', Lautsprecher 5' und Mikrofon 6' sowie ihre funktionellen Verknüpfungen entsprechen denen aus Figur 1 (Sende- und Empfangselektronik 2, Hör- und Sprechschaltung 3 bzw. 4, Lautsprecher 5 und Mikrofon 6). Das Telefon 1' kann wie das Telefon 1 von einem normalhörenden Teilnehmer 11' benutzt werden.

Für den hör- und sprachbehinderten Teilnehmer 12 verläuft der passive Teil der Kommunikation, d.h. die Wahrnehmung des Beitrags seines Kommunikationspartners, analog zu dem oben beschriebenen. Das Kommunikationssystem wandelt mit einer Spracherkennungseinheit 8' von der Hörschaltung 3' übermittelte und im Speicher 7' zwischengespeicherte Sprachsignale in ASCII-Text um, der mit einer Ausgabeeinheit 9', z.B. auf einem Monitor oder Display, dargestellt wird. Der Teilnehmer 12 kann diesen Text nun lesen und mit einer Eingabeeinheit 13 einen Antworttext eingeben, der wie bei EDV zur Kontrolle ebenfalls auf der Ausgabeeinheit 9' dargestellt wird. Der Text wird, z.B. als ASCII-Text, dem Sprachsynthesizer 14 übermittelt, welcher ihn in gesprochene Sprache bzw. in entsprechende Sprachsignale umwandelt. Die Sprachsignale werden an die Sprechschaltung übergeben und dem Kommunikationspartner in gewohnter Weise über das Telefonnetz übermittelt.

Speicher 7, Spracherkennungseinheit 8 und Ausgabeeinheit 9 in Figur 1 bzw. Speicher 7', Spracherkennungseinheit 8', Ein- und Ausgabeeinheit 13 bzw. 9' und Sprachsynthesizer 14 in Figur 2 können jeweils in einem Computer mit Monitor und Tastatur integriert sein und so das erfindungsgemäße Kommunikationssystem ausmachen.. Das Kommunikationssystem kann jedoch auch aus den Komponenten 7 und 8 bzw. 7', 8' und 14 bestehen, die .B. an einen bereits vorhandenen Computer oder ein Terminal oder ein anderes Aus- oder Ein-/Ausgabegerät anschließbar sind. Das Kommunikationssystem wird in beiden Fällen mit einem Telefon verbunden

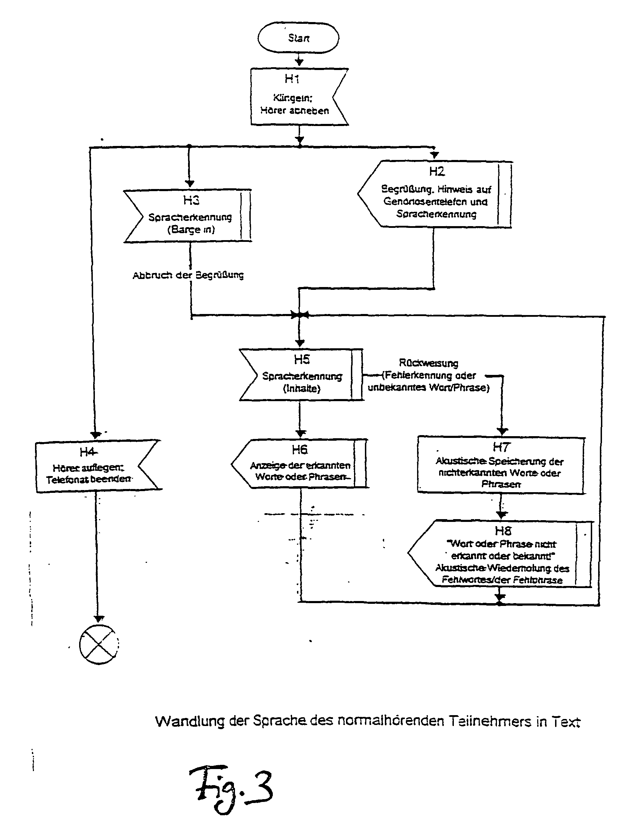

Figur 3 zeigt ein Flußdiagramm für ein Verfahren zum Telefonieren mit einem Kommunikationssystem für Hörbehinderte bzw. zur Umwandlung von Sprache des normalhörenden Teilnehmers in für den Hörbehinderten lesbaren Text im Rahmen eines Kommunikationssystems für Hörbehinderte.

Das Telefonat wird gestartet (H1), wenn der Hörbehinderte auf einen kommenden Ruf hin oder durch den Wahlvorgang den Verbindungsaufbau in Gang gesetzt hat. Dem hörenden Teilnehmer wird gleich zu Beginn der Kommunikation ein Hinweistext (H2) vorgespielt, der auf die Art der Behinderung des hörbehinderten Teilnehmers hinweist und die Funktion des Spracherkenners erläutert. Wenn der hörende Teilnehmer mit der Prozedur bereits vertraut ist, kann er jederzeit durch Barge-in, d.h. Hineinreden, den Spracherkenner (H3) in der Wiedergabe der Ansage unterbrechen. Nach Ablauf der Hinweisansage oder Unterbrechung durch den hörenden Teilnehmer kann mit der Nachrichtenübermittlung begonnen werden. Die Nachrichtenübermittlung läuft so ab, daß der hörende Teilnehmer seine Nachricht in sprachlicher Form dem Spracherkenner (H5) auf der Seite des Gehörlosen anbietet. Bei laufender Erkennung wird das akustische Sprachsignal in einen Sprachspeicher (H7) zwischengespeichert. Im positiven Erkennungsfall werden die sprachlichen Nachrichten in ASCII-Text gewandelt und auf dem Monitor angezeigt. Der Gehörlose kann diese Nachricht lesen und darauf sprachlich reagieren. Das gespeicherte Sprachsignal im Sprachspeicher (H7) wird gelöscht. Im negativen Erkennungsfall wird genau das Wort oder die Phrase, die der Erkenner nicht erkannt hat aus dem Sprachspeicher selektiert. Dieser Signalabschnitt wird in einen Hinweistext eingebunden, so daß der hörende Teilnehmer aufgefordert wird genau das Wort, das nicht erkannt wurde zu wiederholen oder besser durch ein Synonym zu ersetzen und die Nachrichteneingabe zu wiederholen (H8). In dieser Weise wird die Kommunikation fortgesetzt, bis eine der beiden Seiten das Gespräch beendet. (H4).

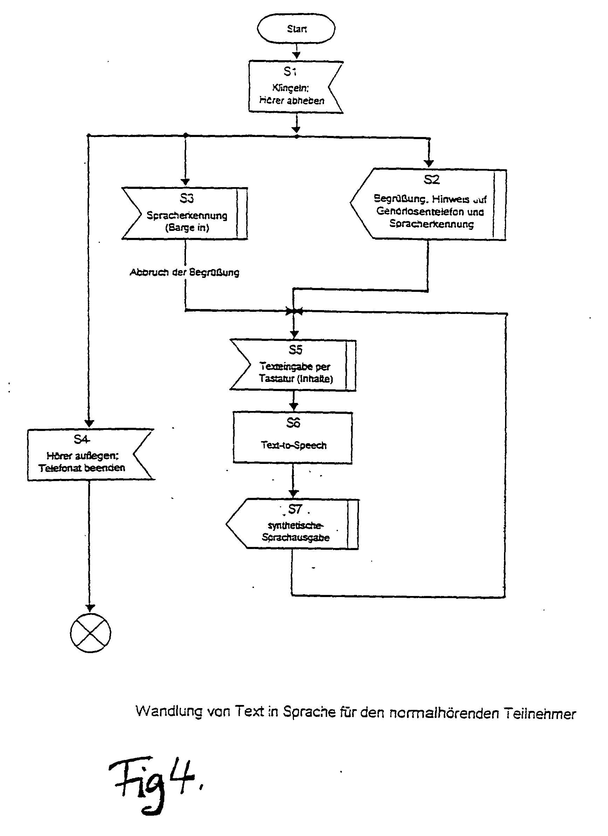

Figur 4 zeigt ein Flußdiagramm für ein Verfahren zum Telefonieren mit einem Kommunikationssystem für Hör- und zusätzlich Sprachbehinderte, insbesondere die Erweiterung des in den Erläuterungen zu Figur 3 beschriebenen Verfahrens mit einem Verfahren zur Umwandlung von Sprache in Text im Rahmen eines solchen Kommunikationssystems.

Der Start der Kommunikation verläuft wie in Figur 3 beschrieben (S1 bis S3). Die Reaktion des Hörbehinderten auf eine erkannte Nachricht, bzw. bei erstmaliger Aussendung einer eigenen Nachricht, erfolgt über eine Texteingabe über die Tastatur (S5) der Endeinrichtung beim Gehörlosen. Mit einem Sprachsynthesizer (S6) wird der Text in Sprache umgewandelt und so dem hörenden Teilnehmer verständlich gemacht (S7). Der Dialog erfolgt in diesem Beispiel wechselseitig per Spracherkennung, wie bei den Erläuterungen zu Figur 3 beschrieben, und durch Sprachsynthese. Die Kommunikation wird dadurch beendet, daß eine der beiden Seiten den Verbindungsabbau einleitet (S4).

### Liste der Bezugszeichen:

- 1, 1': Telefon
- 2, 2': Sende- und Empfangselektronik
- 3,3': Hörschaltung
- 4, 4': Sprechschaltung
- 5, 5': Lautsprecher, z.B. im Telefonhörer
- 6, 6': Mikrofon, z.B. im Telefonhörer
- 7, 7': Speicher
- 8, 8': Spracherkennungseinheit
- 9, 9': Ausgabeeinheit
- 10: Benutzer (hörbehindert)
- 11, 11': Benutzer (normalhörend)
- 12: Benutzer (hör- und sprachbehindert)
- 13: Eingabeeinheit
- 14: Sprachsynthesizer
- 15: Netzanschluß

## Patentansprüche

1. Kommunikationssystem für Hörbehinderte, insbesondere Telefonanlage oder Zubehör zum hörbehindertengerechten Ausstatten einer Telefonanlage, wobei das System eine Spracherkennungseinheit (8,8') aufweist, welche über ein Telefonnetz und mit einem Telefon (1,1') empfangene Signale in einen computerlesbaren Code, insbesondere Sprachsignale in den entsprechenden ASCII-Text, umzuwandeln imstande ist, der an einer Ausgabeeinheit, z.B. Monitor oder Display (9,9'), als Text darstellbar ist, **dadurch gekennzeichnet, dass** im Speicher (7.7') der Spracherkennungseinheit (8,8') die empfangenen Signale zwischengespeichert werden und einem Kommunikationspartner ganz oder teilweise, z.B. ein Wort oder eine Phrase, wieder vorgespielt wird, falls es von der Spracherkennungseinheit (8.8') nicht erkannt wurde, und der Kommunikationspartner mittels einer Ansage aufgefordert wird, die jeweilige Sequenz deutlich zu wiederholen oder ein Synonym oder eine andere Formulierung zu wählen, worauf die wiederholte Sequenz anstelle der ursprünglichen gespeichert und in einen computerlesbaren Code umgewandelt wird.

2. Kommunikationssystem nach Anspruch 1, **dadurch gekennzeichnet,**
**daß** der Spracherkennungseinheit (8,8') ein Speicher (7,7') zugeordnet ist, in dem Ansagetexte speicherbar sind.

3. Kommunikationssystem, insbesondere für Hör- und Sprachbehinderte, nach einem der Ansprüche 1 oder 2, **dadurch gekennzeichnet,**
**daß** ein Sprachsynthesizer (14) eine Nachricht, die als ASCII-Text vorliegt, in ein Sprachsignal umzuwandeln und der Sendeelektronik (2,2') zum Senden an den normalhörenden Kommunikationspartner (11,11') aufzugeben imstande ist.

4. Kommunikationssystem nach Anspruch 3, **dadurch gekennzeichnet,**
**daß** es eine Ein- und Ausgabeeinheit (9,9',13), insbesondere Monitor (9,9') mit Tastatur (13), aufweist, die von der Spracherkennungseinheit (8,8') übermittelte ASCII-Texte als geschriebenen Text darzustellen und eingegebenen Text dem Sprachsynthesizer (14) zu übermitteln imstande ist.

5. Kommunikationssystem nach Anspruch 4, **dadurch gekennzeichnet,**
**daß** die Spracherkennungseinheit (8,8'), der Sprachsynthesizer (14) und die Ein- und Ausgabeeinheit (9,9',13) in einen Computer mit Monitor und Tastatur integriert sind, welcher, z.B. mittels eines Telefonadapters, an ein Telefon oder direkt ans Telefonnetz anschließbar ist.

6. Kommunikationssystem nach einem der vorangegangenen Ansprüche, **dadurch gekennzeichnet,**
**daß** ein eingehender Anruf optisch oder optisch und akustisch signalisiert wird.

7. Kommunikationssystem nach einem der vorangegangenen Ansprüche, **dadurch gekennzeichnet,**
**daß** das Telefon (1) auch in bekannter Weise benutzbar ist.

8. Kommunikationssystem nach einem der vorhergehenden Ansprüche, **dadurch gekennzeichnet,**
**dass** das Telefon (1) eine Sende- und Empfangselektronik (2) zum Empfangen über das Telefonnetz übermittelter Signale, z.B. Sprache, und zum Senden von Signalen über das Telefonnetz an einen Kommunikationspartner sowie einen Ausgang zum Anschluß an die Spracherkennungseinheit (8,8') aufweist, wodurch eine funktionelle Kopplung der Spracherkennungseinheit (8,8') an die Sende- und Empfangselektronik (2) des Telefons (1) herstellbar ist und die Spracherkennungseinheit (8,8') die über das Telefonnetz empfangene Signale in Text, insbesondere Sprachsignale in den entsprechenden ASCII-Text umwandelt, und gegebenenfalls eingespeicherte Nachrichten der Sendeelektronik (2) zum Senden an den Kommunikationspartner aufgibt.

9. Kommunikationssystem nach Anspruch 8, **dadurch gekennzeichnet,**
**daß** das Telefon (1) einen Ausgang zum Anschluß an einen Sprachsynthesizer (14) aufweist, wodurch eine funktionelle Kopplung des Sprachsynthesizers (14) an die Sende- und Empfangselektronik (2) des Telefons (1) herstellbar ist und der Sprachsynthesizer (14) an einer Eingabeeinheit (13) als ASCII-Text eingegebene Nachrichten in ein Sprachsignal umwandelt und der Sendeelektronik (2) zum Senden an den Kommunikationspartner aufgibt.

10. Verfahren zum Telefonieren mit einem Kommunikationssystem für Hörbehinderte, wobei über das Telefonnetz empfangene von einem Kommunikationspartner (11,11') gesprochene Sprache mittels einer Spracherkennungseinheit (14) in einen computerlesbaren Code, insbesondere in den entsprechenden ASCII-Text, umgewandelt und auf einem Bildschirm dargestellt wird, so daß der Hörbehinderte (12,12') die Nachricht lesen und darauf reagieren kann, **dadurch gekennzeichnet, dass**
im Speicher (7.7') der Spracherkennungseinheit (8,8') die empfangenen Signale zwischengespeichert werden und dem Kommunikationspartner ganz oder teilweise, z.B. ein Wort oder eine Phrase, wieder vorgespielt wird, falls es von der Spracherkennungseinheit (8.8') nicht erkannt wurde, und der Kommunikationspartner mittels einer Ansage aufgefordert wird, die jeweilige Sequenz deutlich zu wiederholen oder ein Synonym oder eine andere Formulierung zu wählen, worauf die wiederholte Sequenz anstelle der ursprünglichen gespeichert und in einen computerlesbaren Code umgewandelt wird.

11. Verfahren nach Anspruch 10, **dadurch gekennzeichnet,**
**daß** nach Herstellung einer Verbindung mit einem Kommunikationspartner, z.B. durch Abnehmen des Telefonhörers, Betätigen eines Schalters oder Eingabe eines Befehls an einer Ein- und Ausgabeeinheit (9,9',13), automatisch ein in einem Sprachspeicher gespeicherter Ansagetext abgespielt wird, der den normalhörenden Kommunikationspartner (11,11') darüber informiert, daß er mit einer Telefonanlage mit Spracherkennung verbunden ist.

12. Verfahren nach Anspruch 11, **dadurch gekennzeichnet,**
**daß** die empfangenen Signale im Sprachspeicher wenigstens so lange zwischengespeichert werden, bis die Umwandlung in einen computerlesbaren Code abgeschlossen ist.

13. Verfahren nach einem der Ansprüche 10 bis 12, **dadurch gekennzeichnet,**
**daß** der Benutzer des Kommunikationssystems seinem Kommunikationspartner antwortet, indem er in bekannter Weise in den Telefonhörer oder in ein Mikrofon spricht.

14. Verfahren nach einem der Ansprüche 10 bis 12, **dadurch gekennzeichnet,**
**daß** der Benutzer des Kommunikationssystems, insbesondere ein Sprach- und Hörbehinderter (12,12'), seinem Kommunikationspartner (11,11') antwortet, indem er an einer Ein- und Ausgabeeinheit (9,9',13) eine Nachricht eingibt, die als ASCII-Text einem Sprachsynthesizer (14) übermittelt wird, von diesem in ein Sprachsignal umgewandelt und der Sendeelektronik (2) zum Senden an den Kommunikationspartner (11,11') aufgegeben wird.

## Claims

1. Communication system for the hearing impaired, in particular telephone system or auxiliary equipment for outfitting a telephone system to meet the needs of the hearing impaired, wherein the system has a speech recognition unit (8, 8') that is capable of converting signals received over a telephone network and with a telephone (1, 1') into a computer-readable code, in particular converting speech signals into the corresponding ASCII text, which can be displayed as text on an output unit, e.g., monitor or display (9, 9'), **characterized in that** the received signals are temporarily stored in the memory (7, 7') of the speech recognition unit (8, 8') and are played back to a communication partner in whole or in part, e.g., a word or a phrase, if it was not recognized by the speech recognition unit (8, 8'), and the communication partner is prompted by means of an announcement to clearly repeat the applicable sequence or to choose a synonym or different phrasing, whereupon the repeated sequence is stored and converted into a computer-readable code in place of the original sequence.

2. Communication system according to claim 1, **characterized in that**
a memory (7, 7') in which announcement texts can be stored is associated with the speech recognition unit (8, 8').

3. Communication system, in particular for the hearing and speech impaired, according to any one of claims 1 or 2, **characterized in that**
a speech synthesizer (14) is capable of converting a message present as ASCII text into a speech signal and delivering it to the transmitting electronics (2, 2') for transmission to the communication partner with normal hearing (11, 11').

4. Communication system according to claim 3, **characterized in that**
it has an input and output unit (9, 9', 13), in particular monitor (9, 9') with keyboard (13), that is capable of displaying ASCII texts transmitted by the speech recognition unit (8, 8') as written text and transmitting entered text to the speech synthesizer (14).

5. Communication system according to claim 4, **characterized in that**
the speech recognition unit (8, 8'), speech synthesizer (14), and input and output unit (9, 9', 13) are integrated into a computer with monitor and keyboard, which computer can be connected to a telephone or directly to the telephone network, e.g. by means of a telephone adapter.

6. Communication system according to any one of the preceding claims,
**characterized in that**
an incoming call is signaled visually, or visually and acoustically.

7. Communication system according to any one of the preceding claims,
**characterized in that**
the telephone (1) can also be used in a known manner.

8. Communication system according to any one of the preceding claims,
**characterized in that**
the telephone (1) has transmitting and receiving electronics (2) for receiving signals, e.g. speech, transmitted over the telephone network and for transmitting signals to a communication partner over the telephone network, and also has an output for connection to the speech recognition unit (8, 8'), by which means a functional coupling of the speech recognition unit (8, 8') to the transmitting and receiving electronics (2) of the telephone (1) can be established and the speech recognition unit (8, 8') converts the signals received over the telephone network into text, in particular converts speech signals into the corresponding ASCII text, and if applicable delivers stored messages to the transmitting electronics (2) for transmission to the communication partner.

9. Communication system according to claim 8, **characterized in that** the telephone (1) has an output for connection to a speech synthesizer (14), by which means a functional coupling of the speech synthesizer (14) to the transmitting and receiving electronics (2) of the telephone (1) can be established, and the speech synthesizer (14) converts messages entered as ASCII text at an input unit (13) into a speech signal and delivers the signal to the transmitting electronics (2) for transmission to the communication partner.

10. Method for telephoning using a communication system for the hearing impaired, wherein uttered speech of a communication partner (11, 11') received over the telephone network is converted by a speech recognition unit (14) into a computer-readable code, in particular into the corresponding ASCII text, and is displayed on a screen so that the hearing-impaired person (12, 12') can read and respond to the message,
**characterized in that**
the received signals are temporarily stored in the memory (7, 7') of the speech recognition unit (8, 8') and are played back to the communication partner in whole or in part, e.g., a word or a phrase, if it was not recognized by the speech recognition unit (8, 8'), and the communication partner is prompted by means of an announcement to clearly repeat the applicable sequence or to choose a synonym or different phrasing, whereupon the repeated sequence is stored and converted into a computer-readable code in place of the original sequence.

11. Method according to claim 10, **characterized in that**
after a connection with a communication partner is set up, e.g., by picking up the telephone handset, operating a switch, or entering a command at an input and output unit (9, 9', 13), an announcement stored in a speech memory is automatically played that informs the communication partner with normal hearing (11, 11') that he is connected to a telephone system with speech recognition.

12. Method according to claim 11, **characterized in that**
the received signals are temporarily stored in the speech memory at least until the conversion to a computer-readable code is concluded.

13. Method according to any one of claims 10 through 12, **characterized in that**
the user of the communication system answers his communication partner by speaking into the telephone handset or into a microphone in a known manner.

14. Method according to any one of claims 10 through 12, **characterized in that**
the user of the communication system, in particular a speech and hearing impaired person (12, 12'), answers his communication partner (11, 11') by entering a message at an input and output unit (9, 9', 13) that is transmitted as ASCII text to a speech synthesizer (14) and is converted by the speech synthesizer into a speech signal and delivered to the transmitting electronics (2) for transmission to the communication partner (11, 11').

## Revendications

1. Système de communication pour malentendants, notamment installation téléphonique ou accessoires pour équiper une installation téléphonique pour malentendants dans lequel le système comporte une unité de reconnaissance vocale (8,8') qui est capable de transformer les signaux reçus au moyen d'un réseau téléphonique et un téléphone (1,1') en un code lisible par l'ordinateur, notamment des signaux vocaux, en texte ASCII correspondant qui peut être représenté comme texte sur une unité de sortie comme un moniteur ou un écran d'affichage (9,9') **caractérisé en ce que** dans la mémoire (7,7') de l'unité de reconnaissance vocale (8,8') les signaux reçus sont mémorisés temporairement et sont présentés à un interlocuteur, entièrement ou partiellement, par exemple comme mot ou comme phrase, et s' ils n'ont pas été reconnus par l'unité de reconnaissance vocale (8,8'), l'interlocuteur est invité au moyen d'une annonce, à répéter clairement la séquence respective ou à choisir un synonyme ou une autre formulation et la séquence répétée est ensuite mémorisée au lieu de la séquence initiale et transformée en un code lisible par l'ordinateur.

2. Système de communication selon la revendication 1, **caractérisé en ce qu'**une mémoire (7,7') est affectée au système de reconnaissance vocale (8,8') dans laquelle des textes d'annonce peuvent être mémorisés.

3. Système de communication, notamment pour les malentendants et bègues selon une des revendications 1 ou 2 **caractérisé en ce qu'**un synthétiseur vocal (14) est capable de transformer un message existant sous forme de texte ASCII en un signal vocal et de le transmettre à l'électronique émettrice (2,2') pour l'envoyer à l'interlocuteur normo-entendant (11,11').

4. Système de communication selon la revendication 3, **caractérisé en ce qu'**il comporte une unité d'entrée et de sortie (9,9'.13), notamment un moniteur avec clavier, capable de représenter les textes ASCII transmis par l'unité de reconnaissance vocale sous forme de textes écrits et de transmettre le texte entré au synthétiseur vocal (14).

5. Système de communication selon la revendication 4, **caractérisé en ce que** l'unité de reconnaissance vocale (8,8'), le synthétiseur vocal (14), l'unité d'entrée et de sortie (9,9'.13) sont intégrés dans un ordinateur avec moniteur et clavier qui peut être raccordé à un téléphone ou à un réseau téléphonique, par exemple au moyen d'un adaptateur téléphonique.

6. Système de communication selon une des revendications précédentes **caractérisé en ce qu'**un appel entrant peut être signalé par un signal optique ou un signal optique et acoustique.

7. Système de communication selon une des revendications précédentes **caractérisé en ce que** le téléphone (1) peut aussi être utilisé selon le mode traditionnel.

8. Système de communication selon une des revendications précédentes **caractérisé en ce que** le téléphone (1) comporte une unité d'émission et de réception (2) pour recevoir les signaux transmis par le réseau téléphonique, par exemple le langage et pour envoyer des signaux à un interlocuteur par le réseau téléphonique ainsi qu'une sortie pour se raccorder à une unité de reconnaissance vocale (8,8'), le couplage fonctionnel de l'unité de reconnaissance vocale (8,8') avec l'électronique d'émission et de réception (2) du téléphone (1) pouvant être réalisé et l'unité de reconnaissance vocale (8,8') transformant les signaux reçus par le réseau téléphonique en texte, notamment les signaux vocaux en texte ASII correspondant et le cas échéant transmettant les messages mémorisés à l'électronique d'émission(2) pour les envoyer à l'interlocuteur.

9. Système de communication selon la revendication 8, **caractérisé en ce que** le téléphone (1) comporte une sortie pour raccordement à un synthétiseur vocal (14), le couplage fonctionnel du synthétiseur vocal (14) avec l'électronique d'émission et de réception (2) du téléphone (1) étant réalisable et le synthétiseur vocal (14) transformant les messages envoyés à une unité d'entrée (13) sous forme de texte ASCII en un signal vocal et le transmettant à l'électronique d'émission (2) pour l'envoyer à l'interlocuteur.

10. Procédé pour téléphoner avec une système de communication pour malentendants dans lequel le langage parlé par un interlocuteur (11,11') reçu par un réseau téléphonique est transformé en un code lisible par l'ordinateur au moyen d'une unité de reconnaissance vocale, notamment en texte ASCII correspondant et est représenté sur un écran, de sorte que le malentendant (12,12') peut lire le message et y réagir **caractérisé en ce que** les signaux reçus sont mémorisés temporairement dans la mémoire (7,7') de l'unité de reconnaissance vocale (8,8') et sont reproduits à l'interlocuteur en entier ou partiellement sous forme de mot ou de phrase, s'ils n'ont pas été reconnus par l'unité de reconnaissance vocale (8,8') et l'interlocuteur est invité au moyen d'une annonce à répéter clairement la séquence respective ou à choisir un synonyme ou une autre formulation, la séquence répétée est alors mémorisée à la place de la séquence initiale et transformée en un code lisible par l'ordinateur.

11. Procédé selon la revendication 10 **caractérisé en ce qu'**après établissement d'une liaison avec l'interlocuteur, par exemple en décrochant le combiné téléphonique, actionnant une touche ou entrée d'un ordre sur une unité d'entrée et de sortie (9,9',13) un texte d'annonce mémorisé dans la mémoire vocale est énoncé informant l'interlocuteur normo-entendant (11,11') qu'il est relié à une installation téléphonique avec reconnaissance vocale.

12. Procédé selon la revendication 11 **caractérisé en ce que**
les signaux reçus sont mémorisés temporairement dans la mémoire vocale au moins pendant le temps nécessaire pour que la transformation en un code lisible par l'ordinateur soit achevée.

13. Procédé selon une des revendications 10 à 12 **caractérisée en ce que** l'utilisateur du système de communication répond à son interlocuteur en parlant dans le combiné ou dans un microphone selon le mode traditionnel.

14. Procédé selon une des revendications 10 à 12 **caractérisée en ce que** l'utilisateur du système de communication, notamment un malentendant et un bègue (12,12') répond à son interlocuteur (11,11') en entrant un message dans une unité d'entrée et de sortie (9,9',13) qui est transmis au synthétiseur vocal (14) sous forme de texte ASCII et est transformé par ce dernier en un signal vocal qui est transmis à l'électronique d'émission pour être envoyé à l'interlocuteur(11,11').
